# EUROPÄISCHE PATENTANMELDUNG

(11) **EP 4 732 993 A1**
(43) Veröffentlichungstag der Anmeldung: **29.04.2026**
(21) Anmeldenummer: 25155438.2
(22) Anmeldetag: 31.01.2025
(51) Int. Cl.: B23Q 11/00

(54) **ROTATIONSWERKZEUGTEIL ZUR SPANENTFERNUNG UND ROTATIONSWERKZEUG**

(30) Priorität: 27.10.2024 EP 24209086
(71) Anmelder: Schlageter, Klaus, 78727 Oberndorf (DE)
(72) Erfinder: Schlageter, Klaus, 78727 Oberndorf (DE)
(74) Vertreter: Mzb PartmbB

(57) **Zusammenfassung**

Die Erfindung betrifft ein Rotationswerkzeugteil (10) zur Entfernung von Späne, beispielsweise eine Werkzeugaufnahme zur Aufnahme eines Rotationswerkzeugs (36), insbesondere eines Fräswerkzeugs oder Bohrwerkzeugs zur Bearbeitung eines Werkstücks, wobei das Rotationswerkzeugteil (10) eine Längsachse (L) als Rotationsachse aufweist, umfassend eine Luftfördervorrichtung (12), wobei die Luftfördervorrichtung (12) eine Saugkomponente (16) zum Ansaugen von Luft an einer Umfangsseite (26) und / oder einer Oberseite (19) des Rotationswerkzeugteils (10) umfasst, und wobei die Luftfördervorrichtung (12) eine Blaskomponente (18) zum Blasen von Luft von einer Unterseite (20) des Rotationswerkzeugteils (10), insbesondere in Richtung eines zu bearbeitenden Werkstücks, umfasst. Weiter betrifft die Erfindung ein besonders langlebiges Rotationswerkzeug (36), beispielsweise in Form eines Bohr- oder Fräswerkzeugs.

## Beschreibung

Die vorliegende Erfindung betrifft ein Rotationswerkzeugteil zur Spanentfernung. Das Rotationswerkzeugteil kann beispielsweise mit einem Bohrwerkzeug oder Fräswerkzeug verbunden werden. Beim Bohren bzw. Fräsen entstehende Späne kann durch das Rotationswerkzeugteil von der Bearbeitungsstelle eines bearbeiteten Werkstücks abtransportiert werden.

### Stand der Technik

Aus der europäischen Patentanmeldung EP2422925A1 ist eine Saugvorrichtung in Form einer Abführeinrichtung zum Abführen von Partikeln an einem Bearbeitungsmittel, beispielsweise einem Rotationswerkzeug, bekannt. Die Abführeinrichtung umfasst ein Flügelrad, das eingerichtet ist, eine Luftströmung zum Ansaugen und Abführen von Partikeln, die bei der Bearbeitung mittels des Bearbeitungsmittels entstehen, zu erzeugen. Ferner umfasst sie einen dem Flügelrad vorgeschalteten Abscheider, der Partikel aus der vom Flügelrad angesaugten Luft vor dem Passieren des Flügelrads abscheidet.

### Offenbarung der Erfindung

Mit der bekannten Absaugvorrichtung können Späne, die bei einer spanenden Fertigung eines Werkstücks entstehen, durch Absaugen entfernt werden. Dazu muss die Absaugvorrichtung jedoch sehr dicht über dem Werkstück geführt werden. Beispielsweise bei der Bearbeitung von Metall oder Spannplatten können die entstehenden Späne stark abrasiv wirken. So kommt es durch die Späne zu einem starken Abrieb beispielsweise an Flügeln der Absaugvorrichtung.

Je nach zu bearbeitendem Material und Art der Bearbeitung des Werkstücks kann dadurch die Lebensdauer des bekannten Rotationswerkzeugteils stark verkürzt sein.

Aufgabe der vorliegenden Erfindung ist es daher, ein Rotationswerkzeugteil anzubieten, das ein Werkstück wirkungsvoll von Spänen befreien kann und eine hohe Lebensdauer aufweist.

Gelöst wird die Aufgabe durch ein Rotationswerkzeugteil, wobei das Rotationswerkzeugteil eine Längsachse als Rotationsachse aufweist, umfassend eine Luftfördervorrichtung, wobei die Luftfördervorrichtung eine Saugkomponente zum Ansaugen von Luft an einer Umfangsseite und / oder einer Oberseite des Rotationswerkzeugteils umfasst, und wobei die Luftfördervorrichtung eine Blaskomponente zum Blasen von Luft von einer Unterseite des Rotationswerkzeugteils, insbesondere in Richtung eines zu bearbeitenden Werkstücks, umfasst.

Das Rotationswerkzeugteil kann beispielsweise als Werkzeugaufnahme zur Aufnahme eines Rotationswerkzeugs ausgebildet sein. In das Rotationswerkzeugteil kann beispielsweise ein Bohrwerkzeug oder ein Fräswerkzeug aufgenommen werden und / oder aufgenommen sein.

Durch die Blaskomponente kann somit das Rotationswerkzeugteil, anstatt Luft von dem Werkstück abzusaugen, Luft auf das Werkstück blasen. Späne können weggeblasen und dadurch vom Werkstück entfernt werden.

Ein Gedanke der Erfindung ist dabei, dass die Späne nicht durch das Rotationswerkzeugteil hindurchströmen müssen. Abrieb am Rotationswerkzeugteil, beispielsweise an Flügeln des Rotationswerkzeugteils, durch die Späne kann vermieden werden. Somit kann das hier vorgestellte Rotationswerkzeugteil eine lange Lebensdauer erreichen.

Ein weiterer Gedanke der Erfindung ist, dass die Saugkomponente eingerichtet ist, Luft von der Umfangsseite und / oder der Oberseite anzusaugen. Somit kann Luft aus Bereichen angesaugt werden, in denen sich keine oder zumindest lediglich wenig Späne befinden können. Somit wird zusätzlich Abrieb durch in der angesaugten Luft enthaltene Partikel vermieden oder zumindest minimiert.

Denkbar ist insbesondere, dass die Saugkomponente eingerichtet ist, Umgebungsluft Späne-frei anzusaugen. Dazu kann die Saugkomponente beispielsweise einen Filtervorsatz, beispielsweise ein Gitter, ein Netzmaterial und / oder einen Schaumstoff oder dergleichen, aufweisen. Denkbar ist auch, dass die Saugkomponente enge Lufteinlassschlitze aufweist, durch die zumindest größere Partikel nicht in die Luftfördervorrichtung eindringen können.

Die Luftfördervorrichtung kann wenigstens 12 Flügel aufweisen. Eigene Untersuchungen haben gezeigt, dass sich eine Anzahl von wenigstens 12 Flügeln als besonders günstig erweist. Insbesondere können die wenigstens 12 Flügel an einer Lufteintrittsseite dicht genug nebeneinander angeordnet sein, um selbst als Filtervorsatz zu wirken und / oder enge Lufteinlassschlitze zu bilden. Luft kann in die Luftfördervorrichtung eintreten, Partikel, insbesondere mit einer für Verschleiß relevanten Größe, können abgewiesen werden.

Die Luftfördervorrichtung kann bis zu 20 Flügel aufweisen, um ein günstiges Kosten-Nutzen-Verhältnis zwischen Materialkosten der Flügel und ihrer Abschirmungswirkung hinsichtlich von Partikeln aufrechtzuerhalten. Insbesondere hat sich eine Anzahl von 12 Flügeln als diesbezüglich besonders vorteilhaft erwiesen.

An einer Lufteintrittsseite können die Flügel eine Fase aufweisen, um die Saugleistung der Saugkomponente zu verbessern. In diesem Bereich ist grundsätzlich mit wenigen Partikeln zu rechnen, sodass in diesem Bereich die Flügel filigraner, beispielsweise mit der Fase ausgestattet, gestaltet werden können, ohne deren Lebensdauer wesentlich zu beeinträchtigen.

Wenigstens einer der Flügel kann eine Dämpfungsstruktur aufweisen. Beispielsweise kann die Dämpfungsstruktur als linienförmige Struktur mit ein oder mehreren linienförmigen Erhebungen an einem oder mehreren der Flügel ausgebildet sein. Die Dämpfungsstruktur kann durch die Strömung der Luft verursachte Geräusche und allgemein durch die Strömung bedingte Vibrationen dämpfen.

Die Reinigungswirkung des von dem Rotationswerkzeugteil erzeugten Luftstroms lässt sich optimieren, wenn sich die Luftfördervorrichtung zur Luftaustrittsseite hin konisch verengt.

Eine besonders kompakte Bauform lässt sich erreichen, wenn das Rotationswerkzeugteil, insbesondere die Luftfördervorrichtung, mittels 3D-Druck hergestellt ist. Beispielsweise können die Flügel besonders eng nebeneinander platziert und / oder ausgebildet werden, da nicht wie bei einem spanend hergestellten Rotationswerkzeugteil auf Größen der zu verwendenden Fräswerkzeuge oder dergleichen Rücksicht genommen werden braucht. Somit kann das Rotationswerkzeugteil bei gleichem Bauvolumen höhere Leistungen erzielen im Vergleich zu einem spanend hergestellten Rotationswerkzeugteil.

Denkbar ist, insbesondere im Kunststoff-3D-Druck, bei der Fertigung die Flügel parallel zu einer X- und einer Y-Achse des 3D-Druckers zu drucken. So können Rundlauffehler durch das Drucken im dreidimensionalen Raum vermieden werden.

Da lediglich mit geringem Verschleiß zu rechnen ist, kann das Rotationswerkzeugteil aus einem Kunststoff ausgebildet sein und dadurch besonders günstig in der Herstellung sein.

Alternativ ist auch denkbar, dass zumindest ein Teil des Rotationswerkzeugteils aus einem Metall, insbesondere Aluminium, ausgebildet ist. Insbesondere kann die Luftfördervorrichtung aus dem Metall ausgebildet sein. Denkbar ist beispielsweise, dass das Rotationswerkzeugteil, insbesondere die Luftfördervorrichtung mittels Metall-3D-Druck hergestellt ist. Ein derartiges Rotationswerkzeugteil kann eine hohe Belastbarkeit aufweisen. Es kann keinen oder lediglich geringen Alterungserscheinungen unterliegen. Ein Rotationswerkzeugteil, bei dem zumindest Teile aus Metall ausgebildet sind, kann auch für besonders hohe Rotationsgeschwindigkeiten, wie sie beispielsweise bei Fräsarbeiten erreicht werden, genutzt werden.

Für eine einfachere Montage auf einer Welle oder dergleichen kann die Luftfördervorrichtung eine Schrumpfpassung aufweisen.

Alternativ oder ergänzend kann die Luftfördervorrichtung an einer Mutter angeordnet sein. Denkbar ist auch, dass eine Mutter an der Luftfördervorrichtung ausgebildet ist. Dabei ist denkbar, dass bei Herstellung im 3D-Druck die Mutter auf das Rotationswerkzeugteil aufgedruckt ist und / oder das gesamt4e Rotationswerkzeugteil mitsamt der Mutter im 3D-Druck hergestellt ist. Mithilfe der Mutter kann das Rotationswerkzeugteil beispielsweise mit einem Werkzeug und / oder allgemein einer Antriebsachse verbunden werden.

Darüber hinaus ist auch denkbar, dass das Rotationswerkzeugteil eine Rastung aufweist, mit der auf besonders einfache Weise das Rotationswerkzeugteil mit einem Werkzeug oder dergleichen, insbesondere lösbar, verbindbar sein kann.

Eine besonders flexible Möglichkeit zur Befestigung des Rotationswerkzeugteils beispielsweise an einem Rotationswerkzeugs mit einem Schaft ergibt sich die Klemmvorrichtung kann beispielsweise eine Spannzange sein und / oder umfassen. Eine solche Klemmvorrichtung kann es auch ermöglichen, dass das Rotationswerkzeugteil an unterschiedlichen Positionen entlang des Rotationswerkzeugs und insbesondere dessen Schafts montiert werden kann. Dadurch kann die Höhe des Rotationswerkzeugteils über dem zu bearbeitendes Werkstück eingestellt werden. So kann beispielsweise, wenn das Rotationswerkzeugteil ein Fräswerkzeug ist, das Rotationswerkzeugteil dicht über dem Werkstück montiert werden, sodass ein besonders starker Luftstrom das Werkstück erreichen und von Spänen säubern kann.

Auch ist dadurch denkbar, dass das Rotationswerkzeugteil als Anschlag fungieren kann. Dies kann beispielsweise nützlich sein, wenn das Rotationswerkzeug, an dem das Rotationswerkzeugteil angeordnet ist, ein Bohrwerkzeug oder dergleichen ist. Dann lässt sich beispielsweise eine Bohrtiefe einstellen, die mit dem Bohrwerkzeug maximal erreicht werden kann.

Eine solche Einstellung kann mit besonders hoher Präzision erfolgen, wenn das Rotationswerkzeugteil an der Luftaustrittsseite eine plane oder zumindest im Wesentlichen plane Anschlagfläche aufweist.

In den Rahmen der Erfindung fällt des Weiteren ein Rotationswerkzeug, das ein Rotationswerkzeugteil der vorangehend beschriebenen Art sowie ein Rotationsschneidwerkzeug umfasst. Das Rotationsschneidwerkzeug kann beispielsweise ein Bohrwerkzeug und / oder ein Fräswerkzeug sein und / oder umfassen.

Das Rotationswerkzeugteil kann eingerichtet sein, bei Rotation einen Luftstrom zu generieren, der in einem spitzeren oder gleich spitzen Winkel zur Längsachse strömt als ein Winkel eines Spannkanals des Rotationsschneidwerkzeug zur Längsachse bildet.

Insbesondere ist denkbar, dass das Rotationswerkzeugteil eingerichtet ist, einen zur Längsachse parallelen Luftstrom zu erzeugen.

Bei einem solchen Rotationswerkzeug kann der Luftstrom und allgemein das Rotationswerkzeugteil einen Spanbruch unterstützen. Insbesondere kann der Luftstrom gegen aus dem Rotationsschneidwerkzeug austretende Späne strömen und diese radial wegbiegen oder sogar abbrechen.

Dadurch kann die Spanabfuhr weiter verbessert werden. Belastungen des Rotationsschneidwerkzeug können minimiert werden und dadurch kann die Lebensdauer des Rotationsschneidwerkzeug oder allgemein des Rotationswerkzeugs verlängert werden.

Das Rotationswerkzeugteil kann für sich zur Partikelentfernung oder zusammen mit Rotationswerkzeugen, jeweils zusammen mit einer Antriebsmaschine, beispielsweise einer Handbohrmaschine, einer Handfräsmaschine, einer Ständerbohrmaschine, einer Fräsmaschine, einer CNC-Maschine und / oder dergleichen, verwendet werden.

Es kann beispielsweise zum Ausblasen von Bohrlöchern oder Fräsungen verwendet werden. Dies kann beispielsweise beim Möbelbau, Holzbau und / oder bei der Kunststoffverarbeitung besonders vorteilhaft sein, insbesondere wenn horizontal liegende Platten verarbeitet werden, bei denen Späne sich nicht selbsttätig aus den Bearbeitungsstellen entfernt.

Bei der Nutzung als Bohranschlag ergibt sich neben der Begrenzung der Bohrtiefe der zusätzliche Nutzen einer möglichen Kühlung des Bohrwerkzeugs und / oder des Werkstücks.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: ein Rotationswerkzeugteil in einer perspektivischen Ansicht von schräg oben,
- Fig. 2: das Rotationswerkzeugteil in einer perspektivischen Ansicht von schräg unten,
- Fig. 3: ein Rotationswerkzeug mit einem Rotationswerkzeugteil, in dem ein Rotationsschneidwerkzeug aufgenommen ist,
- Fig. 4: ein weiteres Rotationswerkzeug mit einer Spannzange,
- Fig. 5: ein Bohrautomat mit einem Rotationswerkzeug,
- Fig. 6: eine schematische Darstellung einer Spanbruch-Wirkung des Rotationswerkzeugs,
- Fig. 7: ein Rotationswerkzeugteil mit einer Mutter und
- Fig. 8: eine vergrößerte Detailansicht eines Flügels.

### Ausführungsformen der Erfindung

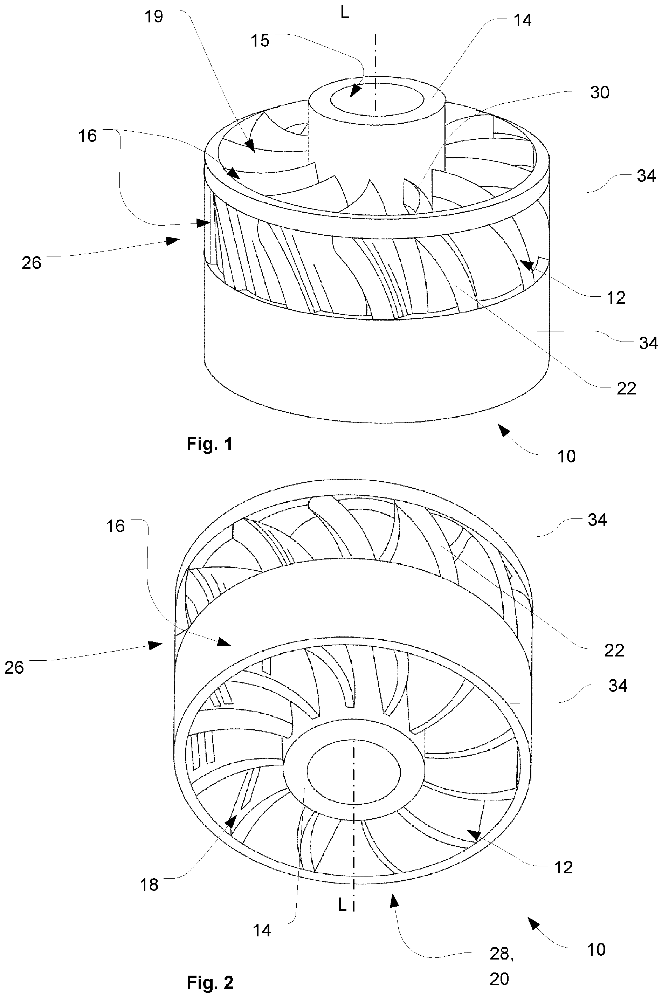

Fig. 1 zeigt in einer perspektivischen Ansicht ein Rotationswerkzeugteil 10 von schräg oben und Fig. 2 zeigt das Rotationswerkzeugteil 10 in einer perspektivischen Ansicht von schräg unten.

Das Rotationswerkzeugteil 10 weist eine Luftfördervorrichtung 12 auf, die an einem Spannfutter 14 angearbeitet ist.

Das Spannfutter 14 weist eine Schrumpfpassung 15 auf, mit der das Rotationswerkzeugteil 10 beispielsweise auf eine Achse eines Rotationswerkzeugs, beispielsweise ein Bohrwerkzeug oder ein Fräswerkzeug, aufgeschrumpft werden kann.

Das Rotationswerkzeugteil 10 ist drehsymmetrisch zu einer Längsachse L ausgebildet.

Die Luftfördervorrichtung 12 weist 12 Flügel 22 auf, die gleichmäßig radial um die Längsachse L herum verteilt angeordnet sind. Zur Vereinfachung der Darstellungen ist in Fig. 1 und Fig. 2 jeweils lediglich einer der Flügel 22 mit einem Bezugszeichen markiert.

Die Luftfördervorrichtung 12 weist einen als Saugkomponente 16 dienenden Bereich auf, mit dem sie bei Rotation des Rotationswerkzeugteils 10 Umgebungsluft, insbesondere von einer Oberseite 19 und / oder einer Umfangsseite 26, in das Rotationswerkzeugteil 10 hinein ansaugen kann.

Die bei Rotation des Rotationswerkzeugteils 10 angesaugte Luft strömt innerhalb des Rotationswerkzeugteils 10 weiter bis zu einer Blaskomponente 18 an einer Luftaustrittsseite 28 an einer der Oberseite 19 gegenüberliegenden Unterseite 20 des Rotationswerkzeugteils 10, wo sie aus dem Rotationswerkzeugteil 10, durch die Rotation des Rotationswerkzeugteils 10, insbesondere der Flügel 22, beschleunigt aus dem Rotationswerkzeugteil 10 austritt und beispielsweise auf ein unter der Unterseite 20 befindliches Werkstück strömt.

An der Unterseite 20 ist eine plane Anschlagfläche 21 ausgebildet.

In der Darstellung gemäß Fig. 1 ist zu erkennen, dass die Flügel 22 an ihrer Oberseite jeweils eine Fase 30 aufweisen. Zur Vereinfachung der Darstellung ist auch hierzu lediglich eine der Fasen 30 mit einem Bezugszeichen versehen.

Das Rotationswerkzeugteil 10 weist ferner zwei Ringe 34 auf, die die Flügel 22 umfangseitig umgeben und mit den Flügeln 22 verbunden sind.

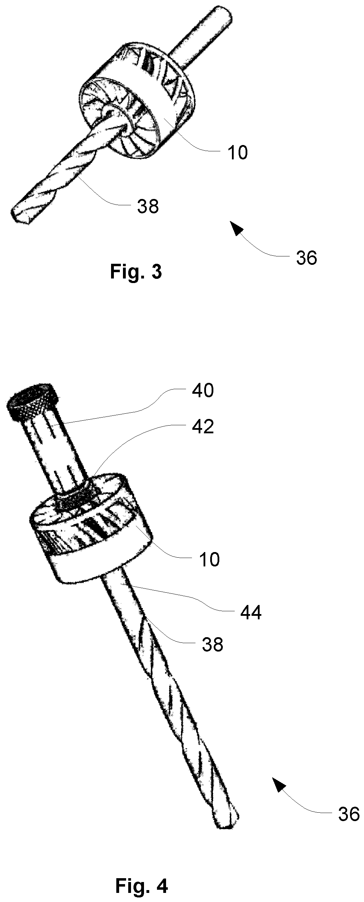

Fig. 3 zeigt ein Rotationswerkzeugs 36 in einer perspektivischen Darstellung. Das Rotationswerkzeug 36 umfasst ein Rotationswerkzeugteil 10 sowie ein Rotationsschneidwerkzeug 38.

Das Rotationsschneidwerkzeug 38 ist in diesem Ausführungsbeispiel ein Bohrwerkzeug, beispielsweise zum Bohren von Metall.

Das Rotationsschneidwerkzeug 38 ist in dem Rotationswerkzeugteil 10 aufgenommen. Insbesondere ist das Rotationswerkzeugteil 10 auf das Rotationsschneidwerkzeug 38 aufgeschrumpft.

Fig. 4 zeigt ein weiteres Rotationswerkzeug 36, das ebenfalls ein Rotationsschneidwerkzeug 38 sowie ein Rotationswerkzeugteil 10 umfasst.

Im Unterschied zu dem vorherigen Ausführungsbeispiel gemäß Fig. 3 weist dieses Rotationswerkzeugteil 10 eine Spannzange 40 mit einer Spannmutter 42 zur lösbaren Befestigung des Rotationsschneidwerkzeugs 38 auf. Mithilfe der Spannzange 40 lässt sich das Rotationswerkzeugteil 10 auch an unterschiedlichen Positionen entlang des Schafts 44 montieren. Dadurch kann das Rotationswerkzeugteil 10 auch als Bohranschlag, beispielsweise zur Tiefenbegrenzung während eines Bohrvorganges, verwendet werden.

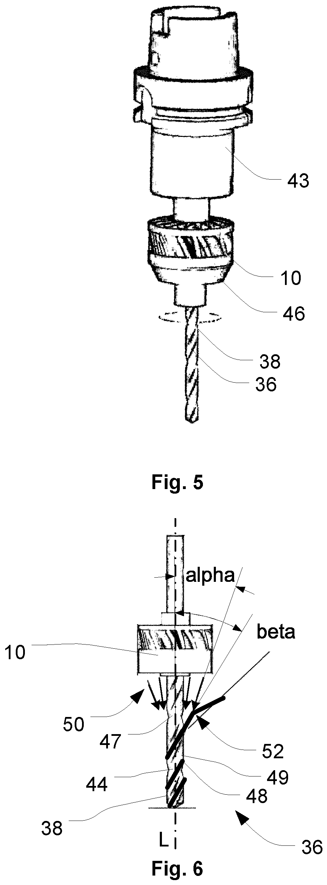

Fig. 5 zeigt eine Werkzeugaufnahme eines Bohrautomaten 43, in den ein Rotationswerkzeug 36 eingespannt ist. Das Rotationswerkzeug 36 weist wiederum ein Rotationswerkzeugteil 10 auf, in das ein Rotationsschneidwerkzeug 38 aufgenommen ist. Wiederum ist das Rotationsschneidwerkzeug 38 ein Bohrwerkzeug.

Eine Besonderheit ist, dass das Rotationswerkzeugteil 10 eine Abdeckung 46 aufweist. Die Abdeckung 46 verjüngt sich nach unten zumindest in einem Abschnitt konisch.

Die Werkzeugaufnahme des Bohrautomaten 43 weist einen pneumatischen Vorschub auf.

Fig. 6 zeigt ebenfalls ein Rotationswerkzeug 36 mit einem Rotationswerkzeugteil 10 und einem darin aufgenommenen Rotationsschneidwerkzeug 38, das beispielhaft wiederum ein Bohrwerkzeug sein kann.

Das Rotationsschneidwerkzeug 38 weist einen Schaft 44 auf, an dem während einer Bearbeitung eines Werkstücks ein Span 48 entlang einer Förderwendel 47 transportiert wird, bis er unter einem Winkel beta gegen die Längsachse L aus der Förderwendel 47 austritt.

Ein Luftstrom 50, der durch Rotation des Rotationswerkzeugteils 10 erzeugt wird, strömt unter einem Maximalwinkel alpha gegen die Längsachse L entlang dem Schaft 44. Der Winkel alpha ist spitzer als der Winkel beta. An einer Bruchstelle 52 bricht der Span 48.

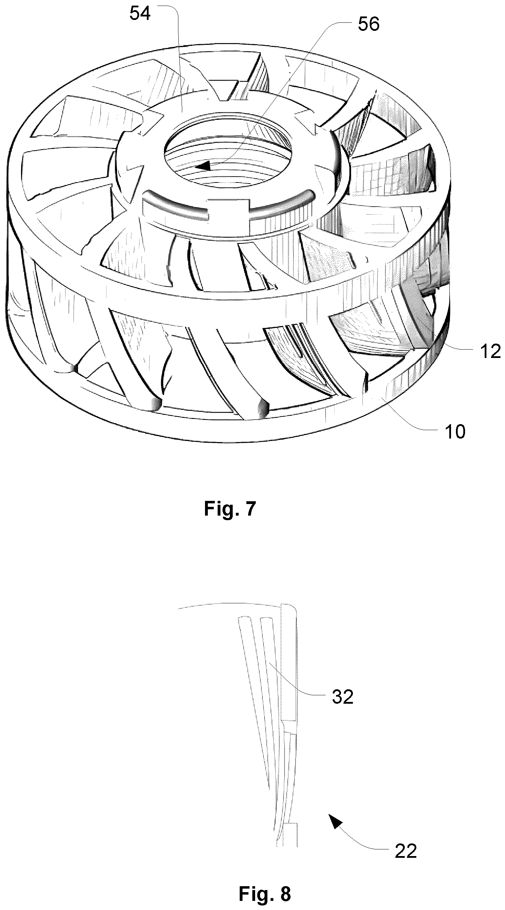

Fig. 7 zeigt ein weiteres Rotationswerkzeugteil 10. Dieses Rotationswerkzeugteil 10 ist mittels 3D-Druck aus einem Kunststoff, beispielsweise ABS, gefertigt.

An seiner Luftfördervorrichtung 12 ist zentral eine Mutter 54 ausgebildet.

Das Rotationswerkzeugteil 10 ist einstückig im 3D-Druck gefertigt.

Innenseitig der Mutter 54 ist ein Gewinde 56 ausgebildet.

Fig. 8 zeigt in einer Detailansicht einen Ausschnitt eines der Flügel 22.

Zu erkennen ist, dass die Oberfläche des Flügels 22 strukturiert ist, wodurch eine Dämpfungsstruktur 32 ausgebildet ist.

Die Dämpfungsstruktur 32 umfasst mehrere, beispielsweise linienförmige Erhebungen, die sich von der übrigen Oberfläche des Flügels 22 abheben.

### Bezugszeichenliste

- 10: Rotationswerkzeugteil
- 12: Luftfördervorrichtung
- 14: Spannfutter
- 15: Schrumpfpassung
- 16: Saugkomponente
- 18: Blaskomponente
- 19: Oberseite
- 20: Unterseite
- 21: Anschlagfläche
- 22: Flügel
- 24: Lufteintrittsseite
- 26: Umfangsseite
- 28: Luftaustrittsseite
- 30: Fase
- 32: Dämpfungsstruktur
- 34: Ring
- 36: Rotationswerkzeug
- 38: Rotationsschneidwerkzeug
- 40: Spannzange
- 42: Spannmutter
- 43: Werkzeugaufnahme eines Bohrautomaten
- 44: Schaft
- 46: Abdeckung
- 47: Förderwendel
- 48: Span
- 49: Spankanal
- 50: Luftstrom
- 52: Bruchstelle
- 54: Mutter
- 56: Gewinde
- L: Längsachse
- Alpha: Winkel
- Beta: Winkel

## Patentansprüche

1. Rotationswerkzeugteil (10), beispielsweise eine Werkzeugaufnahme zur Aufnahme eines Rotationswerkzeugs (36), insbesondere eines Fräswerkzeugs oder Bohrwerkzeugs zur Bearbeitung eines Werkstücks, wobei das Rotationswerkzeugteil (10) eine Längsachse (L) als Rotationsachse aufweist, umfassend eine Luftfördervorrichtung (12),
wobei die Luftfördervorrichtung (12) eine Saugkomponente (16) zum Ansaugen von Luft an einer Umfangsseite (26) und / oder einer Oberseite (19) des Rotationswerkzeugteils (10) umfasst, und
wobei die Luftfördervorrichtung (12) eine Blaskomponente (18) zum Blasen von Luft von einer Unterseite (20) des Rotationswerkzeugteils (10), insbesondere in Richtung eines zu bearbeitenden Werkstücks, umfasst.

2. Rotationswerkzeugteil (10) nach einem der vorhergehenden Patentansprüche, **dadurch gekennzeichnet, dass** die Luftfördervorrichtung (12) wenigstens 12, insbesondere genau 12, Flügel (22) aufweist.

3. Rotationswerkzeugteil (10) nach einem der vorhergehenden Patentansprüche, **dadurch gekennzeichnet, dass** die Flügel (22) an einer Lufteintrittsseite (24) eine Fase (30) aufweisen.

4. Rotationswerkzeugteil (10) nach einem der vorhergehenden Patentansprüche, **dadurch gekennzeichnet, dass** wenigstens einer der Flügel (22) eine Dämpfungsstruktur (32) aufweist.

5. Rotationswerkzeugteil (10) nach einem der vorhergehenden Patentansprüche, **dadurch gekennzeichnet, dass** sich die Luftfördervorrichtung (12) zur Luftaustrittsseite (28) hin konisch verengt.

6. Rotationswerkzeugteil (10) nach einem der vorhergehenden Patentansprüche, **dadurch gekennzeichnet, dass** das Rotationswerkzeugteil (10), insbesondere die Luftfördervorrichtung (12), mittels 3D-Druck hergestellt ist.

7. Rotationswerkzeugteil (10) nach einem der vorhergehenden Patentansprüche, **dadurch gekennzeichnet, dass** das Rotationswerkzeugteil (10) aus einem Kunststoff ausgebildet ist.

8. Rotationswerkzeugteil (10) nach einem der vorhergehenden Patentansprüche, **dadurch gekennzeichnet, dass** zumindest ein Teil des Rotationswerkzeugteils (10) aus einem Metall, insbesondere Aluminium, ausgebildet ist.

9. Rotationswerkzeugteil (10) nach einem der vorhergehenden Patentansprüche, **dadurch gekennzeichnet, dass** die Luftfördervorrichtung (12) eine Schrumpfpassung (15) aufweist.

10. Rotationswerkzeugteil (10) nach einem der vorhergehenden Patentansprüche, **dadurch gekennzeichnet, dass** die Luftfördervorrichtung (12) an einer Mutter (54) angeordnet ist und / oder eine Mutter (54) an der Luftfördervorrichtung (12) ausgebildet ist.

11. Rotationswerkzeugteil (10) nach einem der vorhergehenden Patentansprüche, **dadurch gekennzeichnet, dass** das Rotationswerkzeugteil (10) eine Rastung aufweist.

12. Rotationswerkzeugteil (10) nach einem der vorhergehenden Patentansprüche, **dadurch gekennzeichnet, dass** das Rotationswerkzeugteil (10) eine Klemmvorrichtung aufweist.

13. Rotationswerkzeugteil (10) nach einem der vorhergehenden Patentansprüche, **dadurch gekennzeichnet, dass** das Rotationswerkzeugteil (10) an der Luftaustrittsseite (28) eine plane oder zumindest im Wesentlichen plane Anschlagfläche (21) aufweist.

14. Rotationswerkzeug (36), umfassend ein Rotationswerkzeugteil (10) nach einem der vorhergehenden Patentansprüche und ein Rotationsschneidwerkzeug (38).

15. Rotationswerkzeug (36) nach dem vorhergehenden Patentanspruch, **dadurch gekennzeichnet, dass** das Rotationswerkzeugteil (10) eingerichtet ist, bei Rotation einen Luftstrom (50) zu generieren, der in einem spitzeren oder gleich spitzen Winkel (Alpha) zur Längsachse (L) strömt als ein Winkel (Beta) zwischen einem Spankanal (49) des Rotationsschneidwerkzeugs (38) und der Längsachse (L).
